# EUROPÄISCHE PATENTANMELDUNG

(11) **EP 4 019 189 A1**
(43) Veröffentlichungstag der Anmeldung: **29.06.2022**
(21) Anmeldenummer: 21216188.9
(22) Anmeldetag: 21.12.2021
(51) Int. Cl.: B23Q 39/02, B23Q 1/54

(54) **BEARBEITUNGSMASCHINE**

(30) Priorität: 22.12.2020 DE 102020134737
(71) Anmelder: Klaus-Dieter Klement Verwaltungs GmbH, 06667 Weißenfels (DE)
(72) Erfinder: KLEMENT, Timo Alexander, 52428 Jülich (DE)
(74) Vertreter: Andrejewski - Honke Patent- und Rechtsanwälte Partnerschaft mbB

(57) **Zusammenfassung**

Die Erfindung betrifft einen Bearbeitungskopf, insbesondere Fräskopf zur spanabhebenden Bearbeitung von Werkstücken mit einem um eine Rotationsachse (R) rotierbaren Drehgehäuse (1) und einer Spindelanordnung, wobei eine erste Spindel (7a) der Spindelanordnung verschwenkbar um zumindest 90° um eine erste Schwenkachse (S1) an dem Drehgehäuse (1) angeordnet ist und wobei die erste Schwenkachse (S1) senkrecht zu der Rotationsachse (R) angeordnet ist. Erfindungsgemäß weist die Spindelanordnung zumindest eine zweite Spindel (7b) auf, die unabhängig von der ersten Spindel (7a) verschwenkbar um zumindest 90° um eine zweite Schwenkachse (S2) an dem Drehgehäuse (1) angeordnet ist.

## Beschreibung

Die Erfindung betrifft einen Bearbeitungskopf zur spanabhebenden Bearbeitung von Werkstücken mit einem um eine Rotationsachse rotierbaren Drehgehäuse und einer Spindelanordnung, wobei eine erste Spindel der Spindelanordnung verschwenkbar um zumindest 90° um eine erste Schwenkachse an dem Drehgehäuse angeordnet ist und wobei die erste Schwenkachse senkrecht zu der Rotationssachse angeordnet ist.

Bei derartigen Bearbeitungsköpfen handelt es sich beispielsweise um Fräsköpfe oder Dreh-Fräsköpfe, welche bevorzugt Teil von mehrachsigen Bearbeitungsmaschinen sind. In einem solchen Fall ist der Bearbeitungskopf üblicherweise an einer Linearführungsanordnung entlang mehrerer Achsen verfahrbar angeordnet. Darüber hinaus ermöglicht die dreh- und schwenkbewegliche Anordnung der Spindel eine Bearbeitung von komplexen Geometrien.

Ein gattungsgemäßer Bearbeitungskopf ist beispielsweise aus der DE 696 15 223 T3 bekannt. Es handelt sich hierbei um einen Bearbeitungskopf in Form eines sogenannten Gabelfräskopfes, wobei die Spindel zwischen zwei Gabelarmen vollständig rotierbar angeordnet ist. Diese Rotationsbewegung wird über Elektromotoren bewirkt. Das Werkzeug selbst ist an der Spindel befestigt und wird im Zuge der Bearbeitung über die Spindel in eine Rotationsbewegung versetzt. Eine ähnliche Ausgestaltung ist auch in der DE 10 2005 046 847 A1 offenbart.

Da die spanabhebende Bearbeitung von Werkstücken üblicherweise den Einsatz verschiedener Werkzeuge erfordert, weisen die Bearbeitungsmaschinen in der Regel ein Werkzeugmagazin mit einer Vielzahl von Werkzeugen auf, sodass der Bearbeitungskopf zwischen zwei aufeinanderfolgenden Bearbeitungsschritten automatisch einen Werkzeugwechsel durchführen kann. Hierzu wird das bereits eingespannte Werkzeug in eine freie Aufnahme des Werkzeugmagazins verfahren und dort abgelegt. In einem nächsten Schritt erfolgt dann das Positionieren des Bearbeitungskopfes oberhalb eines neuen Werkzeuges, welches sodann in der Spindel über eine Spannvorrichtung eingespannt wird. Ein solcher Werkzeugwechsel ist demnach stets mit einer gewissen Totzeit verbunden, in der eine Bearbeitung des Werkstückes nicht möglich ist.

Darüber hinaus erfordert auch jedes Werkzeug bzw. jeder Bearbeitungsschritt eine bestimmte Drehzahl und/oder ein bestimmtes Drehmoment, damit eine möglichst effiziente und hochwertige Bearbeitung erfolgen kann. Allerdings ist der Spindelantrieb für einen bestimmten Arbeitsbereich bzw. für bestimmte Betriebsparameter ausgelegt, in denen das optimale Leistungsniveau abgerufen werden kann. Abweichungen beispielsweise von der Nenndrehzahl führen daher zwangsläufig zu einer Herabsetzung der Antriebsleistung.

Der Erfindung liegt daher die Aufgabe zugrunde, einen Bearbeitungskopf anzugeben, der sich gegenüber den bisherigen Bearbeitungsköpfen durch eine höhere Flexibilität und eine effizientere Arbeitsweise auszeichnet.

Gegenstand und Lösung der Aufgabe ist daher ein Bearbeitungskopf gemäß Patentanspruch 1 sowie eine Bearbeitungsmaschine gemäß Patentanspruch 11. Gegenstand der Erfindung ist ferner ein Verfahren zum Betrieb einer erfindungsgemäßen Bearbeitungsmaschine gemäß Patentanspruch 15.

Demnach ist bei einem Bearbeitungskopf der eingangs beschriebenen Art vorgesehen, dass die Spindelanordnung zumindest eine zweite Spindel aufweist, die unabhängig von der ersten Spindel verschwenkbar um zumindest 90° um eine zweite Schwenkachse an dem Drehgehäuse angeordnet ist.

Der Bearbeitungskopf weist somit zumindest zwei Spindeln auf, die separat voneinander angesteuert, bewegt und angetrieben werden können, wodurch der Bearbeitungskopf deutlich flexibler auf unterschiedliche Bearbeitungssituationen reagieren kann. Selbstverständlich ist die Erfindung nicht auf den Einsatz von lediglich zwei Spindeln beschränkt. So können beispielsweise auch zumindest drei, zumindest vier oder mehr Spindeln vorgesehen sein.

Um eine solche hohe Flexibilität zu ermöglichen, sind sowohl die erste als auch die zweite Spindel um einen Schwenkwinkel von zumindest 90° um die jeweilige Schwenkachse verschwenkbar an dem Drehgehäuse gelagert. Besonders bevorzugt ist jedoch ein größerer Schwenkwinkel vorgesehen. So soll der Schwenkwinkel gemäß einer bevorzugten Ausgestaltung für die erste und/oder die zweite Spindel zumindest 110°, bevorzugt zumindest 180°, besonders bevorzugt zumindest 220° betragen.

Gemäß einer Weiterbildung der Erfindung ist jeweils der ersten und der zweiten Spindel ein separat ansteuerbarer Schwenkantrieb zugeordnet, über die die erste Spindel um die erste Schwenkachse und die zweite Spindel um die zweite Schwenkachse gedreht werden kann. Durch den Einsatz von zwei separaten Schwenkantrieben ist es somit möglich, beide Spindeln unabhängig voneinander zu positionieren. Hierzu sind die Spindeln bevorzugt in einem Schwenkgehäuse angeordnet, wobei dann das jeweilige Schwenkgehäuse schwenkbeweglich in der ersten bzw. der zweiten Schwenkachse gelagert ist. Über den jeweiligen Schwenkantrieb können sodann das jeweilige Schwenkgehäuse bzw. die in dem Schwenkgehäuse angeordnete Spindel in die erforderliche Schwenkwinkelposition gebracht werden.

Eine bevorzugte Ausgestaltung der Erfindung sieht vor, dass zumindest einer der Schwenkantriebe vorzugsweise aber zumindest der erste und der zweite Schwenkantrieb als Direktantrieb ausgebildet sind. Unter einem Direktantrieb wird im Rahmen der Erfindung eine Anordnung bezeichnet, bei der die Rotationsachse des jeweiligen Schwenkantriebs unmittelbar und ohne Zwischenschaltung eines Getriebes oder dergleichen auf die Spindel bzw. auf das Schwenkgehäuse einwirkt. Entsprechend weisen die Schwenkantriebe eine Betriebsrotationsachse auf, welche mit der Schwenkachse des zugeordneten Schwenkgehäuses zusammenfällt. Hierdurch ist es möglich, die Schwenkgehäuse sehr schnell und genau zu verschwenken. Gleichzeitig wird auch die Anzahl der verschleißanfälligen Bauteile reduziert. Je nach Ausgestaltung können auch die Betriebsrotationsachsen sämtlicher Schwenkantriebe und die Schwenkachsen sämtlicher Schwenkgehäuse zusammenfallen.

Der erste und/oder der zweite Schwenkantrieb sind gemäß einer bevorzugten Ausgestaltung der Erfindung als Elektromotor ausgeführt. Insbesondere handelt es sich um Torque-Motoren. Bei Torque-Motoren handelt es sich um bürstenlose Permanentmagnet-Synchronmotoren, die bei vergleichsweise kleiner Baugröße und bei mittlerer Geschwindigkeit ein hohes Drehmoment erreichen. Insbesondere wird ein hohes Maß an Positioniergenauigkeit erreicht, sodass sich derartige Motoren insbesondere für den Werkzeugmaschinenbau eignen.

Die erste und die zweite Spindel verfügen darüber hinaus bevorzugt jeweils über einen Spindelantrieb, über die ein jeweils an der jeweiligen Spindel angeordnetes Werkzeug um eine senkrecht zur jeweiligen Schwenkachse verlaufende Spindelachse rotiert werden kann. Unter einer Spindeldrehachse wird demnach die Drehachse verstanden, um die das jeweilige Werkzeug zur Bearbeitung von Werkstöcken rotiert bzw. die Spindel in Rotation versetzt werden kann. Entsprechend beschreibt die Rotationsachse die Drehachse des Drehgehäuses, die Schwenkachse die Drehachse der jeweiligen Spindel an dem Drehgehäuse und die Spindeldrehachse die Drehachse des Werkzeuges bzw. der Spindel selbst. Der erste und/oder der zweite Spindelantrieb sind gemäß einer bevorzugten Ausgestaltung der Erfindung als Elektromotor ausgeführt. Insbesondere handelt es sich um Torque-Motoren.

Die Ausrichtung der Spindeln ist insbesondere so gewählt, dass zumindest die erste Spindel, bevorzugt aber beide Spindeln eine Spindeldrehachse aufweisen, die durch den ersten Schwenkantrieb in eine parallele Ausrichtung zur Rotationssachse des Drehgehäuses gebracht werden können.

Gemäß einer bevorzugten Weiterbildung der Erfindung ist somit vorgesehen, dass auch die zweite Spindel so an dem Drehgehäuse gelagert ist, dass die Spindeldrehachse der zweiten Spindel durch den zweiten Spindelantrieb in eine parallele Ausrichtung zur Rotationssachse gebracht werden kann. In einem solchen Fall definieren sowohl die erste als auch die zweite Spindel Ebenen, in denen sie verschwenkt werden können, welche senkrecht zur ersten und zur zweiten Schwenkachse stehen und parallel zueinander angeordnet sind. Diese Ebenen sind gemäß einer bevorzugten Ausgestaltung zwischen 300 und 900 mm, bevorzugt zwischen 310 mm und 850 mm, besonders bevorzugt zwischen 320 und 820 mm, voneinander beabstandet.

Gemäß einer Weiterbildung sind diese Ebenen nicht nur parallel zueinander angeordnet. Vielmehr fallen die erste und die zweite Schwenkachse zusammen. Demnach verlaufen beide Achsen identisch, sodass entsprechend beide Spindeln in der gleichen Art und Weise positioniert werden können. Alternativ ist es aber natürlich auch möglich, dass die erste und die zweite Schwenkachse bzw. die durch die Schwenkbewegung definierten Ebenen nicht parallel, sondern beispielsweise senkrecht zueinander angeordnet sind.

Durch die erfindungsgemäße Ausbildung mit zumindest zwei Spindeln lässt sich der Bearbeitungskopf für unterschiedliche Anwendungszwecke flexibel einsetzen. Beispielsweise ist es möglich, beide Spindeln mit jeweils einem Werkzeug zu beschicken, die entweder gleichzeitig oder aber in aufeinanderfolgenden Bearbeitungsschritten eingesetzt werden. Insbesondere bei einer aufeinanderfolgenden Bearbeitung ist dann zwischen den einzelnen Bearbeitungsschritten kein Werkzeugwechsel notwendig.

Dies ist vor allem dann sinnvoll, wenn in der ersten Spindel ein erstes Werkzeug und in der zweites Spindel ein zweites Werkzeug angeordnet sind, wobei sich das erste und das zweite Werkzeug in ihrer Form und/oder ihrer Ausgestaltung voneinander unterscheiden. Beispielsweise kann es sich bei dem ersten Werkzeug um ein Bohrwerkzeug und bei dem zweiten Werkzeug um ein Fräswerkzeug handeln. Hierbei ergibt sich der Unterschied, dass ein Bohrer während des zerspanenden Bearbeitungsprozesses lediglich entlang seiner Drehachse geführt wird, während ein Fräser zumindest eine Bewegungskomponente quer zur Drehrichtung aufweist. Entsprechend können die Werkzeuge daher in ihrer Form voneinander abweichen. Alternativ kann es sich auch um Werkzeuge des gleichen Typs handeln, die sich aber beispielsweise in ihrer Form, z. B. im Durchmesser, voneinander unterscheiden. So kann beispielsweise das erste Werkzeug einen größeren Durchmesser aufweisen als das zweite Werkzeug, sodass mit dem ersten Werkzeug verhältnismäßig grobe Zerspanprozesse durchgeführt werden können, während das zweite Werkzeug für die Feinbearbeitung vorgesehen ist. Natürlich ist auch eine umgekehrte Anordnung möglich.

Alternativ oder ergänzend eignet sich die Erfindung aber auch dazu, Spindeln vorzusehen, bei denen sich die Spindelantriebe der ersten und der zweiten Spindel in zumindest einem Betriebsparameter voneinander unterscheiden. Betriebsparameter meint in diesem Zusammenhang beispielsweise die Nenndrehzahl, das Maximaldrehmoment und/oder der Leistung. Ausgehend von einer solchen Ausgestaltung kann der erste Spindelantrieb beispielsweise ein hohes maximales Drehmoment und der zweite Spindelantrieb eine hohe Nenndrehzahl aufweisen. Insofern eignet sich beispielsweise dann die erste Spindel für ein Werkzeug, bei dem der Materialabtrag vor allem durch eine hohe Krafteinwirkung bedingt ist, während die zweite Spindel einen geringeren Krafteintrag, dafür aber eine hohe Drehzahl benötigt. Durch die bisherige Ausgestaltung derartiger Bearbeitungsköpfe kann zwar das Werkzeug gewechselt werden. Die Ausgestaltung der Spindel ist aber während des Bearbeitungsprozesses vorgegeben, sodass entsprechend eine Bearbeitung des Werkstückes gegebenenfalls in einem nicht optimalen Betriebsbereich der Spindel erfolgt. Gemäß einer besonders bevorzugten Ausgestaltung der Erfindung beträgt das Verhältnis der Nenndrehzahl zwischen dem zweiten und dem ersten Spindelantrieb zumindest 1:2, besonders bevorzugt zumindest 1:5, ganz besonders bevorzugt zumindest 2. Bevorzugt beträgt das Verhältnis des maximalen Drehmoments zwischen dem ersten und dem zweiten Spindelantrieb zumindest 1, besonders bevorzugt zumindest 1,5, besonders bevorzugt zumindest 2.

Gemäß eine bevorzugten Ausgestaltung ist der Bearbeitungskopf nach Art eines Gabelkopfes ausgebildet. Hierzu weist das Drehgehäuse eine gabelförmige Ausgestaltung mit zwei Außengabelarmen und zumindest einem Innengabelarm auf, wobei der Innengabelarm zwischen den beiden Außengabelarmen angeordnet ist und wobei die erste und die zweite Spindel jeweils zwischen einem Außengabelarm und einem Innengabelarm angeordnet sind. Demnach sind also bevorzugt die Schwenkgehäuse der beiden Spindeln schwenkbeweglich einerseits an einem Außengabelarm und andererseits einem Innengabelarm befestigt. Dies ermöglicht eine besonders gute Abstützung der Schwenkgehäuse und führt zu einer geringen Schwingungsbelastung des Gabelkopfes.

Die Außengabelarme und der zumindest eine Innengabelarm sind ferner über eine horizontale Platte miteinander verbunden. Um einen möglichst großen Schwenkbereich der ersten und der zweiten Spindel ausbilden zu können, weisen die Außengabelarme und der zumindest eine Innengabelarm abgesehen von der horizontalen Platte keine weitere Verbindung auf, sodass die Spindeln entlang der jeweiligen Schwenkachse über einen großen Schwenkwinkelbereich verschwenkt werden können.

Bevorzugt sind bei einer solchen Ausgestaltung der erste und der zweite Schwenkantrieb jeweils in den Außengabelarmen angeordnet. Dies hat den Vorteil, dass der Abstand zwischen den beiden Spindeln gering gehalten werden kann, sodass ein Wechsel von der ersten auf die zweite Spindel bzw. von dem ersten auf das zweite Werkzeug ohne weite Verfahrwege des Bearbeitungskopfes möglich ist. Grundsätzlich ist es aber selbstverständlich auch möglich, in dem Innengabelarm einen Schwenkantrieb vorzusehen. Eine solche Ausgestaltung ist beispielsweise dann sinnvoll, wenn mehr als zwei Spindeln vorgesehen sind. Eine Anordnung in den Außengabelarmen setzt allerdings auch einen gewissen Bauraum voraus, insbesondere wenn die Schwenkantriebe als Direktantrieb angeordnet sind.

In einer Weiterbildung der Erfindung ist das Drehgehäuse an einem Tragarm drehbar um die Rotationssachse befestigt, wobei das Drehgehäuse gemäß einer bevorzugten Ausgestaltung vollständig bzw. um 360° drehbar ist. Der Tragarm kann dafür vorgesehen sein, den Bearbeitungskopf in einer Bearbeitungsmaschine anzuordnen bzw. zu montieren. Dies erfolgt üblicherweise an einer Linearführungsanordnung, sodass der Bearbeitungskopf nicht nur gedreht, sondern auch entlang der Raumkoordinaten verfahren werden kann. Zur Drehung des Drehgehäuses an dem Tragarm ist entsprechend ein Drehantrieb vorgesehen, der beispielsweise in dem Tragarm angeordnet sein kann. Hierdurch kann das Drehgehäuse vergleichsweise schlank ausgeführt sein, da es lediglich die einzelnen Schwenkantriebe aufnehmen muss. Der Drehantrieb ist gemäß einer bevorzugten Ausgestaltung der Erfindung als Elektromotor ausgeführt. Insbesondere handelt es sich um einen Torque-Motor.

Gegenstand der Erfindung ist ferner eine Bearbeitungsmaschine gemäß Patentanspruch 11 mit einem Aufspanntisch zur Aufnahme eines Werkstückes und einer Linearführungsanordnung, wobei ein erfindungsgemäßer Bearbeitungskopf an der den Linearführungsanordnung befestigt ist.

Bei der Bearbeitungsmaschine handelt es sich bevorzugt um eine Fräsmaschine oder um eine Dreh-Fräsmaschine. Im Gegensatz zu einer reinen Fräsmaschine ist bei einer Dreh-Fräsmaschine auch der Aufspanntisch derart drehbar angeordnet, dass ein Zerspanen ohne Drehung des Werkzeuges, sondern nur durch Drehung des Werkstückes möglich ist.

Über die Linearführungsanordnung kann der Bearbeitungskopf entlang des Aufspanntisches bewegt werden. Hierzu weist die Linearführungsanordnung zumindest zwei horizontale Linearführungen auf, sodass eine Bewegung in einer parallelen Ebene zum Aufspanntisch möglich wird. Besonders bevorzugt ist auch eine vertikale Linearführung vorgesehen, über die eine Bewegung des Bearbeitungskopfes in Richtung des Aufspanntisches oder in entgegengesetzter Richtung möglich ist. Die Linearführungsanordnung ist bevorzugt oberhalb des Aufspanntisches angeordnet. Möglich ist allerdings auch eine Ausgestaltung, bei der die Linearführungsanordnung seitlich zum Aufspanntisch angeordnet ist.

Ausgehend von einer Anordnung oberhalb des Aufspanntisches ist bevorzugt vorgesehen, dass der Bearbeitungskopf an einer vertikalen, in Richtung des Aufspanntisches verfahrbaren Linearführung derart angeordnet ist, dass die Drehachse entlang der vertikalen Richtung verläuft. Bei einer Ausgestaltung mit einer seitlich angeordneten Linearführung ist der Bearbeitungskopf bevorzugt an einer horizontalen, entlang des Aufspanntisches verfahrbaren Linearführung angeordnet, sodass dann die Drehachse entlang einer horizontalen Richtung bzw. senkrecht zur vertikalen Richtung verläuft.

Auch hinsichtlich des Aufspanntisches ergeben sich verschiedene Ausgestaltungsformen. So weist dieser üblicherweise eine Werkstückaufnahmevorrichtung auf, über die das zu bearbeitende Werkstück auf dem Aufspanntisch befestigt, insbesondere klemmend befestigt, werden kann. Hierzu können in oder an dem Aufspanntisch eine oder mehrere Spannvorrichtungen angeordnet sein, die das Werkstück elektrisch, pneumatisch oder hydraulisch an dem Aufspanntisch verspannen.

Die Werkstückaufnahmevorrichtung kann ferner einen Abschnitt des Aufspanntisches bilden oder auf dem Aufspanntisch angeordnet sein. Sofern dieser Drehtisch einen Teil des Aufspanntisches bildet, so bedeutet dies im Rahmen der Erfindung, dass dieser mit angrenzenden Flächen eine gemeinsame Ebene bildet.

Gemäß einer bevorzugten Ausgestaltung der Erfindung kann der Aufspanntisch oder zumindest der die Werkstückaufnahmevorrichtung aufweisende Abschnitt als Drehtisch ausgebildet sein. Ein solcher Drehtisch weist den Vorteil auf, dass nicht nur der Bearbeitungskopf und damit das Werkzeug, sondern auch das Werkstück zu einem gewissen Maße bewegt werden kann. Hierdurch lassen sich die Bewegungsabläufe des Werkzeuges und des Werkstückes zueinander wesentlich besser optimieren und die Bearbeitungszeit reduzieren. Alternativ oder ergänzend kann mit Hilfe eines solchen Drehtisches auch eine zuvor beschriebene Zerspanung erfolgen, bei der lediglich der Drehtisch, nicht aber das Werkzeug rotiert. Der Drehtisch weist hierzu einen Drehtischantrieb, insbesondere in Form eines Elektro- bzw. Torque-Motors auf.

Gegenstand der Erfindung ist ferner ein Verfahren zum Betrieb einer erfindungsgemäßen Bearbeitungsmaschine, wobei ein erstes Werkzeug in der ersten Spindel und ein zweites Werkzeug in der zweiten Spindel eingespannt sind und wobei ein auf dem Aufspanntisch eingespanntes Werkstück zunächst in einem ersten Bearbeitungsschritt mit dem ersten Werkzeug und in einem zweiten Bearbeitungsschritt mit dem zweiten Werkzeug spanabhebend bearbeitet wird. Zwischen diesen beiden Bearbeitungsschritten ist entsprechend kein Werkzeugwechsel in den einzelnen Spindeln erforderlich. Vielmehr kann unmittelbar nach dem ersten Bearbeitungsschritt in den zweiten Bearbeitungsschritt übergegangen werden.

Gemäß einer bevorzugten Ausgestaltung der Erfindung unterscheiden sich die Werkzeuge hinsichtlich ihrer Form und/oder ihrer Ausgestaltung voneinander. Hierdurch kann mit den einzelnen Werkzeugen unterschiedlichen Anforderungen Rechnung getragen werden. Beispielsweise kann in dem ersten Bearbeitungsschritt mit dem ersten Werkzeug eine grobe Bearbeitung des Werkstückes erfolgen, während in dem zweiten Bearbeitungsschritt mithilfe des zweiten Werkzeuges eine im Vergleich dazu feinere Nachbearbeitung erfolgt.

Besonders bevorzugt ist vorgesehen, dass die erste Spindel in dem ersten Bearbeitungsschritt und die zweite Spindel in dem zweiten Bearbeitungsschritt jeweils für zumindest einen Betriebsparameter in einem Bereich betrieben werden, wobei die Bereiche nicht miteinander überlappen. Bei diesen Betriebsparametern kann es sich beispielsweise um die Drehzahl und/oder das Drehmoment handeln. Folglich wäre für den ersten Bearbeitungsschritt beispielsweise ein anderer Drehzahlbereich gewählt als für den zweiten Bearbeitungsschritt. Dies gilt gleichermaßen auch entsprechend für das Drehmoment.

Im Folgenden wird die Erfindung anhand eines Ausführungsbeispiels näher erläutert. Es zeigen:
- Fig. 1: einen erfindungsgemäßen Bearbeitungskopf in einer isometrischen Ansicht,
- Fig. 2: den Bearbeitungskopf gemäß der Fig. 1 in einer Vorderansicht und
- Fig. 3: eine erfindungsgemäße Bearbeitungsmaschine.

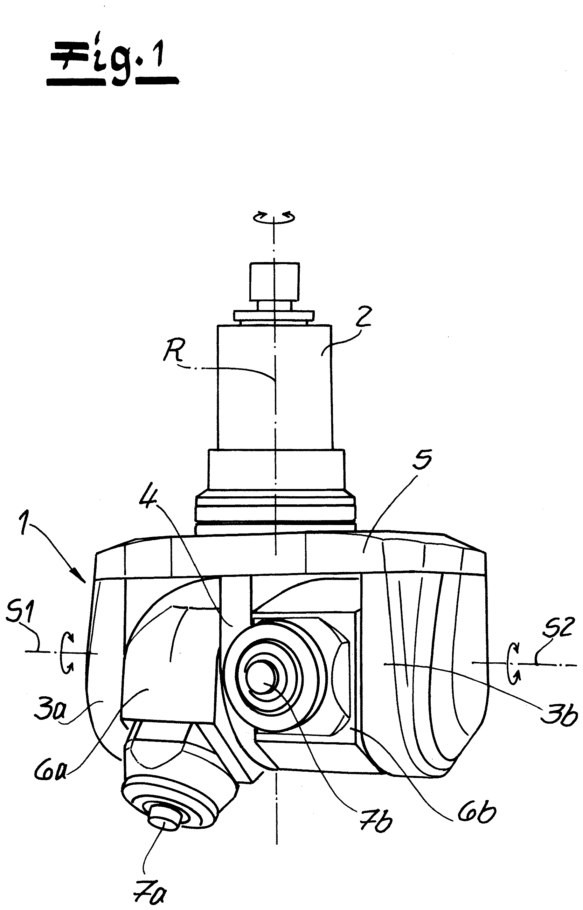

Die Fig. 1 zeigt eine Ausgestaltung des erfindungsgemäßen Bearbeitungskopfes in Form eines sogenannten Gabelfräskopfes. Der Bearbeitungskopf weist ein Drehgehäuse 1 auf, welches rotierbar um eine Rotationssachse R an einem Tragarm 2 befestigt ist. In dem Tragarm 2 ist ein Drehantrieb in Form eines Torque-Motors angeordnet, über den eine Drehung des Drehgehäuses 1 bewirkt wird. Gemäß der gezeigten Ausführungsform ist eine vollständige Drehung bzw. eine Drehung um 360° möglich. Der Tragarm 2 ist wiederum dafür vorgesehen, den Bearbeitungskopf an einer Bearbeitungsmaschine oder dergleichen zu montieren.

Das Drehgehäuse 1 ist gabelförmig ausgebildet und weist zwei Außengabelarme 3a, 3b sowie einen zwischen den Außengabelarmen 3a, 3b angeordneten Innengabelarm 4 auf, wobei die Außengabelarme 3a, 3b und der Innengabelarm 4 über eine horizontale Platte 5 miteinander verbunden sind. Diese horizontale Platte 5 dient darüber hinaus der Befestigung des Drehgehäuses 1 an dem Tragarm 2.

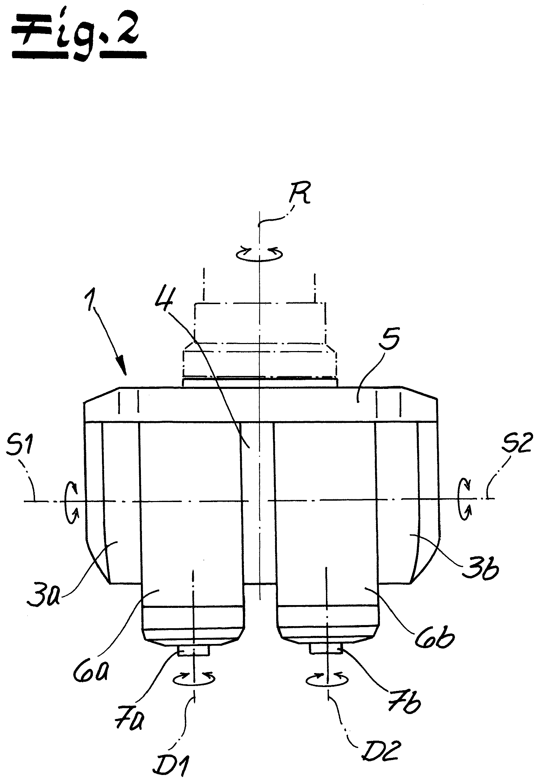

Die Außengabelarme 3a, 3b sind jeweils zu dem Innengabelarm 4 beabstandet, wobei ein erstes Schwenkgehäuse 6a in dem Freiraum zwischen dem Außengabelarm 3a und dem Innengabelarm 4 angeordnet ist. Entsprechend ist ein zweites Schwenkgehäuse 6b in dem Freiraum zwischen dem Außengabelarm 3b und dem Innengabelarm 4 angeordnet. Hierbei sind die Schwenkgehäuse 6a, 6b so gelagert, dass eine Drehung in dem jeweiligen Freiraum möglich ist. Das erste Schwenkgehäuse 6a kann um eine erste Schwenkachse S1 und das zweite Schwenkgehäuse 6b um eine zweite Schwenkachse S2 rotieren, wobei insbesondere in einer vergleichenden Ansicht mit der Fig. 2 deutlich wird, dass gemäß dem gezeigten Beispiel die Schwenkachsen S1, S2 zusammenfallen.

Wie anhand der Fig. 1 und der Fig. 2 deutlich wird, ist der Freiraum jeweils zwischen den Außengabelarmen 6a, 6b und dem Innengabelarm 4 für die Schwenkgehäuse 6a, 6b bezüglich einer Drehbewegung um die Schwenkachsen S1, S2 lediglich durch die horizontale Platte 5 begrenzt, sodass insbesondere eine Drehbewegung um die Schwenkachse S1, S2 um zumindest 180° möglich ist. Diese Drehbewegung der Schwenkgehäuse 6a, 6b wird über Schwenkantriebe in den Außengabelarmen 6a, 6b ermöglicht, wobei in dem Außengabelarm 3a ein erster Schwenkantrieb für das Schwenkgehäuse 6a und in dem zweiten Außengabelarm 3b ein zweiter Schwenkantrieb für das Schwenkgehäuse 6b angeordnet ist. Die Schwenkantriebe sind als Direktantrieb ausgebildet und weisen daher Betriebsotationsachsen auf, welche mit den Schwenkachsen S1, S2 zusammenfallen. Auch bei den Schwenkantrieben handelt es sich in dem gezeigten Beispiel um Torque-Motoren, durch die eine schnelle und exakte Positionierung der Schwenkgehäuse 6a, 6b möglich ist.

Die Schwenkgehäuse 6a, 6b weisen darüber hinaus eine erste Spindel 7a und eine zweite Spindel 7b auf, die entsprechend durch die Schwenkgehäuse 6a, 6b entlang der Schwenkachsen S1, S2 und entlang der Rotationsachse R bewegt werden können. Darüber hinaus weisen beide Spindeln 7a, 7b auch einen eigenen Spindelantrieb auf, sodass beide Spindeln 7a, 7b sowohl einzeln betrieben als auch weitestgehend frei voneinander positioniert werden können. So zeigt die Fig. 1, dass beide Spindeln 7a, 7b unterschiedlich bezüglich der Schwenkachsen S1, S2 ausgerichtet sind. Dies ist dadurch möglich, dass beide Schwenkgehäuse 6a, 6b über einen eigenständigen Schwenkantrieb verfügen.

Gemäß der erfindungsgemäßen Ausgestaltung ist es möglich, unterschiedliche Werkzeuge in den Spindeln 7a, 7b vorzusehen, sodass ohne einen Werkzeugwechsel nacheinander verschiedene Bearbeitungsschritte vorgenommen werden können. Beispielsweise kann in einer der beiden Spindeln 7a, 7b ein Werkzeug für eine vergleichsweise grobe Bearbeitung und in der jeweils anderen Spindel 7a, 7b ein Werkzeug für eine Feinbearbeitung vorgesehen sein. Darüber hinaus unterscheiden sich in dem gezeigten Beispiel auch die Spindel 7a, 7b in den Betriebsparametern voneinander. So weist die erste Spindel 7a im Vergleich zur zweiten Spindel 7b eine höhere Nenndrehzahl und die zweite Spindel 7b ein höheres maximales Drehmoment auf. Selbstverständlich können aber auch beide Spindeln die gleichen Betriebsparameter aufweisen. Dies ist je nach Anforderung wählbar.

Gemäß der Fig. 2 ist ferner ersichtlich, dass die Schwenkgehäuse 6a, 6b durch die zusammenfallenden Schwenkachsen S1, S2 parallel zueinander angeordnet und beabstandet sind. Hierbei spannen die Schwenkachse 6a, 6b im Zuge einer schwenkbeweglichen Bewegung parallele Ebenen auf, die senkrecht zu den Schwenkachsen S1, S2 angeordnet sind und die zumindest in einem Bereich zwischen 300 und 900 mm, bevorzugt zwischen 310 und 850 mm, besonders bevorzugt zwischen 320 in 820 mm voneinander beabstandet sind.

Darüber hinaus weisen die Spindel 7a, 7b jeweils eine Spindelachse D1, D2 auf, die jeweils in den parallelen Ebenen liegen und die die eigentlichen Drehachsen für die Rotationsbewegung der in den Spindeln 7a, 7b eingesetzten Werkzeuge darstellen.

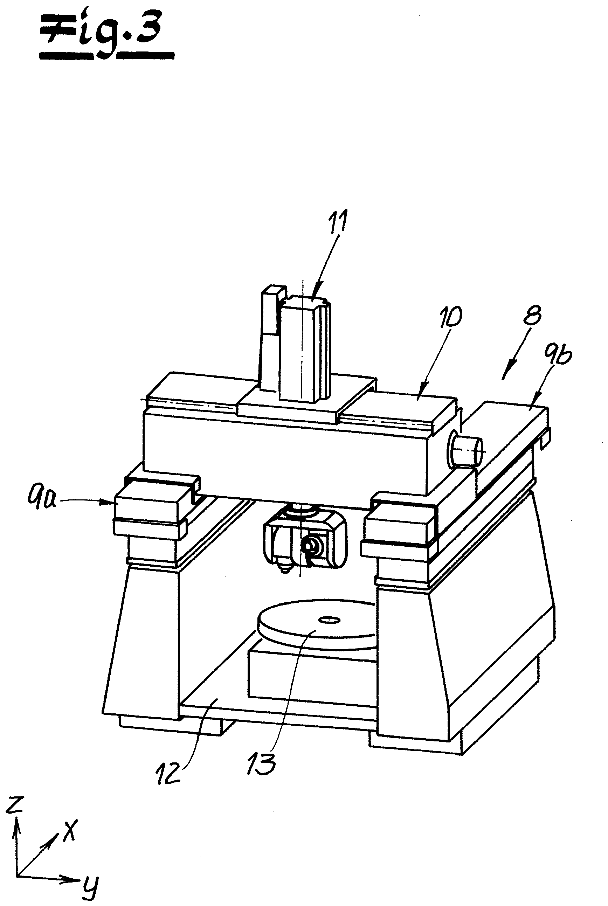

Die Fig. 3 zeigt eine Bearbeitungsmaschine in Form einer sogenannten Portalfräsmaschine, bei der der erfindungsgemäße Bearbeitungskopf an einer Linearführungsanordnung 8 befestigt ist. Diese Linearführungsanordnung besteht aus zwei parallel zueinander angeordneten ersten horizontalen Linearführungen 9a, 9b, welche ein Verfahren des Bearbeitungskopfes in eine erste horizontale Richtung X ermöglichen. Auf diesen ersten Linearführungen 9a, 9b ist ferner eine zweite horizontale Linearführung 10 angeordnet, die ein Verfahren des Bearbeitungskopfes in eine zweite horizontale Richtung Y ermöglicht. Auf dieser zweiten Linearführung 10 ist sodann wiederum ein Schlitten angeordnet, der eine vertikale Linearführung 11 in eine vertikale Richtung Z verfahren kann. An dieser vertikalen Linearführung 11 ist dann der Bearbeitungskopf angeordnet.

Unterhalb der Linearführungsanordnung 8 weist die Bearbeitungsmaschine einen Aufspanntisch 12 und einen auf dem Aufspanntisch 12 angeordneten Drehtisch 13 auf. Dieser Drehtisch 13 verfügt über eine Werkstückaufnahme, über die ein zu bearbeitendes Werkstück drehbar fixiert werden kann. Sodann kann der Bearbeitungskopf entlang der Raumrichtungen X, Y, Z durch die Linearführungsanordnung 8 verfahren und die Spindeln 7a, 7b durch den Bearbeitungskopf verschwenkt werden. Durch Drehung des Drehtisches 13 kann darüber hinaus auch das Werkstück in einem gewissen Maße positioniert werden, sodass die Bearbeitung in einfacher und schneller Art und Weise erfolgen kann.

## Patentansprüche

1. Bearbeitungskopf, insbesondere Fräskopf, zur spanabhebenden Bearbeitung von Werkstücken mit einem um eine Rotationsachse (R) rotierbaren Drehgehäuse (1) und einer Spindelanordnung, wobei eine erste Spindel (7a) der Spindelanordnung verschwenkbar um zumindest 90° um eine erste Schwenkachse (S1) an dem Drehgehäuse (1) angeordnet ist und wobei die erste Schwenkachse (S1) senkrecht zu der Rotationsachse (R) angeordnet ist, **dadurch gekennzeichnet, dass**
die Spindelanordnung zumindest eine zweite Spindel (7b) aufweist, die unabhängig von der ersten Spindel (7a) verschwenkbar um zumindest 90° um eine zweite Schwenkachse (S2) an dem Drehgehäuse (1) angeordnet ist.

2. Bearbeitungskopf nach Anspruch 1, **dadurch gekennzeichnet, dass** der ersten und der zweiten Spindel (7a, 7b) jeweils ein Schwenkantrieb zugeordnet sind, über die die erste Spindel (7a) um die erste Schwenkachse (S1) und die zweite Spindel (7b) um die zweite Schwenkachse (S2) gedreht werden kann.

3. Bearbeitungskopf nach Anspruch 2, **dadurch gekennzeichnet, dass** der erste und/oder der zweite Schwenkantrieb ein Elektromotor, insbesondere ein Torque-Motor, ist.

4. Bearbeitungskopf nach einem der Ansprüche 1 bis 3, **dadurch gekennzeichnet, dass** die erste und die zweite Spindel (7a, 7b) jeweils einen Spindelantrieb aufweisen, über die ein an der jeweiligen Spindel (7a, 7b) angeordnetes Werkzeug um eine senkrecht zur jeweiligen Schwenkachse (S1, S2) verlaufenden Spindelachse (D1, D2) rotiert werden kann.

5. Bearbeitungskopf nach Anspruch 4, **dadurch gekennzeichnet, dass** Betriebsrotationsachsen der Spindelantriebe mit den Schwenkachsen (S1, S2) der zugeordneten Spindel (7a, 7b) zusammenfallen.

6. Bearbeitungskopf nach einem der Ansprüche 1 bis 5, **dadurch gekennzeichnet, dass** an der ersten Spindel (7a) ein erstes Werkzeug und an der zweiten Spindel (7b) ein zweites Werkzeug angeordnet ist, wobei sich das erste und das zweite Werkzeug in ihrer Form und/oder in ihrer Ausgestaltung voneinander unterscheiden.

7. Bearbeitungskopf nach Anspruch 5 oder 6, **dadurch gekennzeichnet, dass** sich die Spindelantriebe der ersten und der zweiten Spindel (7a, 7b) in zumindest einem Betriebsparameter voneinander unterscheiden.

8. Bearbeitungskopf nach einem der Ansprüche 1 bis 7, **dadurch gekennzeichnet, dass** die erste und zweite Schwenkachse (S1, S2) zusammenfallen.

9. Bearbeitungskopf nach einem der Ansprüche 1 bis 8, **dadurch gekennzeichnet, dass** das Drehgehäuse (1) gabelförmig mit zwei Außengabelarmen (3a, 3b) und zumindest einem Innengabelarm (4) ausgebildet ist, wobei die erste und die zweite Spindel jeweils zwischen einem Außengabelarm und einem Innengabelarm angeordnet sind.

10. Bearbeitungskopf nach Anspruch 9, **dadurch gekennzeichnet, dass** der erste und der zweite Schwenkantrieb jeweils in einem der Außengabelarme (3a, 3b) angeordnet sind.

11. Bearbeitungskopf nach einem der Ansprüche 1 bis 10, **dadurch gekennzeichnet, dass** das Drehgehäuse (1) an einem Tragarm (2) drehbar um die Rotationsachse (R) angeordnet ist.

12. Bearbeitungsmaschine mit einem mit einem Aufspanntisch (12) zur Aufnahme eines Werkstückes und einer oberhalb des Aufspanntisches (12) angeordneten Linearführungsanordnung (8), wobei ein Bearbeitungskopf nach einem der Ansprüche 1 bis 11 an der Linearführungsanordnung (8) befestigt ist.

13. Bearbeitungsmaschine nach Anspruch 12, wobei die Linearführungsanordnung (8) für eine Bewegung des Bearbeitungskopfes entlang von drei senkrecht zueinander angeordneten Raumrichtungen (X, Y, Z) ausgebildet ist.

14. Bearbeitungsmaschine nach Anspruch 12 oder 13, wobei eine Werkstückaufnahmevorrichtung vorgesehen ist, an der ein zu bearbeitendes Werkstück befestigbar ist, wobei die Werkstückaufnahmevorrichtung auf einem Drehtisch (13) angeordnet ist, der einen Abschnitt des Aufspanntisches (12) bildet oder auf dem Aufspanntisch (12) angeordnet ist und eine Drehung des Werkstückes ermöglicht.

15. Bearbeitungsmaschine nach einem der Ansprüche 12 bis 14, wobei der Bearbeitungskopf an einer vertikalen, in Richtung des Aufspanntisches (11) verfahrbaren Linearführung (11) derart angeordnet ist, dass die Rotationsachse (R) entlang der vertikalen Richtung verläuft.

16. Verfahren zum Betrieb einer Bearbeitungsmaschine nach einem der Ansprüche 12 bis 15, wobei ein erstes Werkzeug in der ersten Spindel (7a) und ein zweites Werkzeug in der zweiten Spindel (7b) eingespannt sind und wobei ein auf dem Aufspanntisch (12) eingespanntes Werkstück zunächst in einem ersten Bearbeitungsschritt mit dem ersten Werkzeug und in einem zweiten Bearbeitungsschritt mit dem zweiten Werkzeug spanabhebend bearbeitet wird.

17. Verfahren nach Anspruch 16, wobei sich die Werkzeuge hinsichtlich ihrer Form und/oder ihrer Ausgestaltung voneinander unterscheiden.

18. Verfahren nach Anspruch 16 oder 17, wobei die erste Spindel (7a) in dem ersten Bearbeitungsschritt und die zweite Spindel (7b) in dem zweiten Bearbeitungsschritt jeweils für zumindest einen Betriebsparameter in einem Bereich betrieben werden, die nicht miteinander überlappen.
